# EUROPÄISCHE PATENTANMELDUNG

(11) **EP 4 718 856 A1**
(43) Veröffentlichungstag der Anmeldung: **01.04.2026**
(21) Anmeldenummer: 25201549.0
(22) Anmeldetag: 11.09.2025
(51) Int. Cl.: H04N 23/45, H04N 23/55, H04N 23/81, H04N 23/69

(54) **KAMERA EINES MOBILEN GERÄTS ZUM ERZEUGEN EINER TELEABBILDUNG**

(30) Priorität: 27.09.2024 DE 102024128121
(71) Anmelder: Carl Zeiss AG, 73447 Oberkochen (DE)
(72) Erfinder: FRANZ, Gerald, 73447 Oberkochen (DE); OMLOR, Lars, 73447 Oberkochen (DE); PHILIP, Alen, 73447 Oberkochen (DE)
(74) Vertreter: PATERIS Patentanwälte PartmbB

(57) **Zusammenfassung**

Es wird eine Kamera (20) eines mobilen Geräts (1) beschrieben, welche mindestens zwei Eintrittsöffnungen (2, 3) und mindestens zwei Bildsensoren (6, 7) umfasst, wobei eine erste Eintrittsöffnung (2) einem ersten Bildsensor (6) über einen ersten Abbildungspfad (8) zugeordnet ist und eine zweite Eintrittsöffnung (3) einem zweiten Bildsensor (7) über einen zweiten Abbildungspfad (9) zugeordnet ist, wobei die Eintrittsöffnungen (2, 3) jeweils eine Lichteintrittsfläche mit einer Längsrichtung (13) und einer senkrecht dazu verlaufenden Querrichtung (14) aufweisen, wobei jeweils die Länge (15) der Eintrittsöffnung (2, 3) in Längsrichtung (13) mindestens um den Faktor 1,2 größer ist wie die Breite (16) der Eintrittsöffnung (2, 3) in Querrichtung (14), und wobei der erste Abbildungspfad (8) und der zweite Abbildungspfad (9) jeweils eine anamorphe Optik (4, 5) umfassen.

## Beschreibung

Die vorliegende Erfindung betrifft eine Kamera eines mobilen Geräts, ein mobiles Gerät und ein Verfahren zum Erzeugen einer Abbildung, insbesondere einer Teleabbildung, mittels einer Kamera.

Die Möglichkeit einer Aufnahme von qualitativ hochwertigen Teleabbildungen, also vergrößerten Abbildungen eines weiter entfernten Objekts, mittels in mobile Geräte integrierten Kameras ist einerseits aus der Sicht von Konsumenten erwünscht, stellt andererseits aber für Hersteller eine erhebliche technische Herausforderung dar. Kameras für die Aufnahme von vergrößerten Abbildungen erfordern hierfür ausgelegte Linsen, insbesondere Telelinsen oder Telephotolinsen, sowie eine große Blendenöffnung oder Apertur. Im Zusammenhang mit Kameras für üblicherweise sehr flache mobile Geräte, insbesondere Mobiltelefone, ist die Größe der Apertur oder Blendenöffnung im Hinblick auf den zur Verfügung stehenden Bauraum stark eingeschränkt, sodass die mögliche Eintrittsöffnung auch bei einem gefalteten Strahlengang oder Abbildungspfad begrenzt ist. Im Falle einer quadratischen Eintrittsöffnung passt ein zur Faltung des Strahlengangs erforderlicher Spiegel ab einer bestimmten Größe der Eintrittsöffnung und damit auch des Spiegels in Bezug auf seine Höhe nicht mehr in ein Gehäuse eines gängigen mobilen Geräts.

Rechteckige Eintrittsöffnungen erhöhen zwar die effektive Größe oder Fläche der Eintrittsöffnung, aber das größere Aspektverhältnis, welches dann im Falle einer sogenannten Schlitz-Apertur, also einer rechteckigen Eintrittsöffnung mit einem Seitenverhältnis von mindestens 3:2, beispielsweise 3:1 oder größer ist, führt zum Auftreten von beugungsbedingten Artefakten. Darüber hinaus impliziert ein mit einer größeren Eintrittsöffnung verbundenes größeres Sichtfeld (FOV - field of view) einen größeren Bildsensor, welcher ebenfalls unter Umständen nicht in ein mobiles Gerät hineinpasst.

Aktuell sind nur Telekameras für mobile Geräte mit einer großen Fokuslänge oder Brennweite, die in ihrer Funktion einer Kleinbildkamera mit einer Brennweite beispielsweise von mehr als 200 mm entsprechen, bekannt, deren Bilder ein vergleichsweise kleines Sichtfeld liefern und in ihrer Qualität durch beugungsbedingte Artefakte eingeschränkt sind.

In dem Dokument Carles, G. and Harvey, A. R.: Multi-aperture imaging for flat cameras, in: Optics letters, Vol. 45, No. 22, S. 6182-6185, vom 15.11.2020 werden flache Kameras mit einer oder mehreren rechteckigen Eintrittsöffnungen beschrieben, wobei eine Mehrzahl an mittels Fouriertransformation transformierten Bilddaten zu einem gemeinsamen Bilddatensatz zusammengesetzt und rücktransformiert werden.

Vor dem beschriebenen Hintergrund ist es Aufgabe der vorliegenden Erfindung, eine vorteilhafte Kamera eines mobilen Geräts, ein vorteilhaftes mobiles Gerät und ein vorteilhaftes Verfahren zum Erzeugen einer Abbildung, insbesondere einer Teleabbildung, mittels einer Kamera zur Verfügung zu stellen. Diese Aufgaben werden gemäß den unabhängigen Ansprüchen gelöst. Die abhängigen Ansprüche enthalten weitere vorteilhafte Ausgestaltungen der Erfindung.

Die erfindungsgemäße Kamera eines mobilen Geräts umfasst mindestens zwei Eintrittsöffnungen, mit anderen Worten mindestens zwei Blenden oder Aperturen bzw. Lichteintrittsaperturen, und mindestens zwei Bildsensoren. Dabei ist eine erste Eintrittsöffnung einem ersten Bildsensor über einen ersten Abbildungspfad zugeordnet und eine zweite Eintrittsöffnung ist einem zweiten Bildsensor über einen zweiten Abbildungspfad zugeordnet. Ein Abbildungspfad definiert den Strahlengang eines Lichtstrahlenbündels von einer Eintrittsblende oder Eintrittsöffnung bis zu einer Bildebene oder einem Bildsensor. Der jeweilige Abbildungspfad legt also den jeweiligen Strahlengang in der Kamera fest. Es wird mit anderen Worten Licht von der ersten Eintrittsöffnung zu dem ersten Bildsensor geleitet und Licht von der zweiten Eintrittsöffnung zu dem zweiten Bildsensor geleitet. Für Telekameras in den üblicherweise sehr flachen mobilen Geräten, insbesondere Mobiltelefonen, fallen in der Regel wegen des begrenzten Bauraums die Eintrittsblende oder Eintrittsöffnung mit der Eintrittspupille zusammen. Dies muss aber nicht zwingend so sein, d.h. es kann auch eine innenliegende Apertur oder Blende vorliegen. Für die vorliegende Erfindung ist nur entscheidend, dass die Eintrittspupille des gesamten optischen Pfads (einschließlich eines Umlenkprismas und Gehäuseteilen) in zwei senkrecht zueinanderstehenden Richtungen unterschiedlich ist, d.h. die Abbildung in zwei zueinander senkrecht stehenden Richtungen unterschiedliche Qualität (Unschärfe) besitzen.

Die mindestens zwei Eintrittsöffnungen weisen jeweils eine Lichteintrittsfläche mit einer Längsrichtung, z.B. einer Längsachse eines auf die Eintrittsöffnung bezogenen lokalen Koordinatensystems, und einer senkrecht dazu verlaufenden Querrichtung, z.B. einer Querachse eines auf die Eintrittsöffnung bezogenen lokalen Koordinatensystems, auf. Dabei ist jeweils die Länge der Eintrittsöffnung in Längsrichtung, also die Abmessung der Eintrittsöffnung in Längsrichtung, mindestens um den Faktor 1,2, vorzugsweise um den Faktor 2, größer ist als die Breite der Eintrittsöffnung in Querrichtung, also die Abmessung der Eintrittsöffnung in Querrichtung. Die Blendenöffnungen brauchen dabei nicht rechteckig zu sein, d.h. es sind auch elliptische oder anders geformte Blendenöffnungen denkbar.

Der erste Abbildungspfad, also der Strahlengang zwischen der ersten Eintrittsöffnung und dem ersten Bildsensor, und der zweite Abbildungspfad, also der Strahlengang zwischen der zweiten Eintrittsöffnung und dem zweiten Bildsensor, umfassen vorzugsweise jeweils eine anamorphe Optik oder mit anderen Worten mindestens einen Anamorphoten. Die anamorphe Optik kann mindestens ein zylindrisches optisches Element aufweisen, z.B. mindestens eine Zylinderlinse oder mindestens einen Zylinderspiegel. Das zylindrische optische Element kann refraktiv oder diffraktiv ausgestaltet sein.

Die erfindungsgemäße Kamera, bei der es sich auch um ein Kamerasystem oder um eine Kamera-Anordnung handeln kann, ermöglicht mit sehr geringem Bauraum eine Erfassung von Bilddaten zum Erzeugen von qualitativ hochwertigen Teleabbildungen. Dabei erlaubt die geometrische Ausgestaltung der Eintrittsöffnungen, also ihre schlitzartige Form, die Integration von mindestens zwei gefalteten Strahlengängen in ein mobiles Gerät, z.B. ein Mobiltelefon. Durch eine Kombination, der von den mindestens zwei Bildsensoren erfassten Bilddaten, lassen sich nahezu die gesamten Bildinformationen einer Teleabbildung erzeugen, für welche gemäß dem Stand der Technik ein Eintrittsöffnung und ein Bildsensor mit jeweils einer Größe erforderlich sind, welche nicht in ein Mobiltelefon integrierbar sind. Die Verwendung einer anamorphen Optik ermöglicht ein im Vergleich zu bisher bekannten Lösungen vergrößertes Sichtfeld auch bei großen Vergrößerungen und Bildgrößen. Es können also schmalere Bildsensoren verwendet werden, ohne dass dies zu einem reduzierten Sichtfeld (FOV) führt. Weiterhin werden durch die Fouriertransformationen eine nur geringe Rechenzeit und Rechenleistung zum Erzeugen einer qualitativ hochwertigen Teleabbildung benötigt.

Die vorliegende Erfindung bietet ein Kamerasystem mit einer sehr effektiven Eintrittsöffnung, welches die Integration von Linsen mit einer langen Fokuslänge und einem großen FOV in ein mobiles Gerät, z.B. ein Mobiltelefon, ermöglicht. Weiterhin bietet die erfindungsgemäße Kamera eine sehr hohe effektive Apertur, z.B. eine Blendenzahl von 1,4 (Blendenzahl F = Brennweite f / Aperturdurchmesser D), welche in flache Gehäuse von mobilen Geräten integrierbar sind, insbesondere zur Realisierung von großen Fokuslängen, z.B. f=21mm.

In einer vorteilhaften Variante sind die erste Eintrittsöffnung und die zweite Eintrittsöffnung geometrisch so zueinander angeordnet, dass die Längsrichtung der ersten Eintrittsöffnung und die Längsrichtung der zweiten Eintrittsöffnung einen Winkel zwischen 70 Grad und 110 Grad, insbesondere zwischen 80 Grad und 100 Grad, vorzugsweise 90 Grad, einschließen. Die senkrechte oder nahezu senkrechte Anordnung der Längsrichtungen der Eintrittsöffnungen zueinander hat den Vorteil, dass ein großes Sichtfeld erzielt werden kann. Zudem kann nahezu die gesamte Bildinformation einer vergleichbaren Teleabbildung rekonstruiert werden, wobei die vergleichbare Teleabbildung mit einem quadratischen Bildsensor und einer quadratischen Eintrittsöffnung mit einer Seitenlänge, welche der Länge der vorliegend verwendeten beiden Eintrittsöffnungen in Längsrichtung entspricht, aufgenommen ist. Die Eintrittsöffnungen können T-förmig oder L-förmig zueinander angeordnet sein.

Vorzugsweise umfasst die Kamera eine Auswertungseinrichtung oder Bildverarbeitungseinrichtung. Die Auswertungseinrichtung oder Bildverarbeitungseinrichtung ist dazu ausgebildet, von den mindestens zwei Bildsensoren, z.B. dem ersten und dem zweiten Bildsensor, erfasste Bilddaten zu empfangen, die empfangenen Bilddaten der einzelnen Bildsensoren mittels Fouriertransformation zu transformieren, aus den transformierten Bilddaten einen gemeinsamen Datensatz zu generieren, also die transformierten Bilddaten zu einem gemeinsamen Datensatz zusammenzufügen, und den generierten gemeinsamen Datensatz mittels Fouriertransformation zurück zu transformieren. Auf diese Weise lassen sich mittels einer nur einen sehr geringen Bauraum beanspruchenden Kamera qualitativ hochwertige Teleabbildungen mit einer Vergrößerung, die in dem zur Verfügung stehenden Bauraum normalerweise nicht realisierbar ist, erzeugen.

Insbesondere kann die Bildverarbeitungseinrichtung dazu ausgebildet sein, zum Generieren des gemeinsamen Datensatzes die transformierten Bilddaten der einzelnen Bildsensoren teilweise zu maskieren, sodass sich die transformierten Bilddaten gegenseitig ergänzen und/oder teilweise überlappen, z.B. addiert werden. Zusätzlich oder alternativ dazu kann die Bildverarbeitungseinrichtung dazu ausgebildet sein, zum Generieren des gemeinsamen Datensatzes die transformierten Bilddaten der einzelnen Bildsensoren so auszuwählen, z.B. auszuschneiden, dass sich die transformierten Bilddaten gegenseitig ergänzen und/oder teilweise überlappen, z.B. addiert werden. Diese Varianten ermöglichen eine nahezu vollständige Bildrekonstruktion zum Erzeugen einer qualitativ hochwertigen Teleabbildung.

In einer weiteren vorteilhaften Variante kann die Bildverarbeitungseinrichtung zur Korrektur von Artefakten und/oder Aberrationen in einer mittels der zurücktransformierten Bilddaten erzeugten Abbildung oder einer Bilddatei und/oder zur Ergänzung von Bilddaten in von den Bildsensoren nicht erfassten Fourier-Spektralbereichen, z.B. einer unscharfen Abbildung von Objektstrukturen, die schräg zu den beiden Längsrichtungen der Blenden oder Eintrittsöffnung ausgerichtet sind, ausgelegt sein. Hierdurch kann die Qualität der erzeugten Teleabbildung verbessert werden. Vorzugsweise kann die Bildverarbeitungseinrichtung zur Korrektur von Artefakten und/oder Aberrationen und/oder zur Ergänzung von Bilddaten in einer mittels der zurücktransformierten Bilddaten erzeugten Abbildung mittels eines neuronalen Netzwerks ausgelegt sein. Hierdurch kann die Qualität der erzeugten Teleabbildung weiter verbessert werden.

Die Bildverarbeitungseinrichtung kann zum Pixel Binning ausgelegt sein. Hierdurch lässt sich eine Zoom-Funktion realisieren und/oder die Vergrößerung reduzieren und/oder das Sichtfeld (FOV) vergrößern.

Optional können der erste Abbildungspfad, insbesondere der Strahlengang zwischen der ersten Eintrittsöffnung und dem ersten Bildsensor, und/oder der zweite Abbildungspfad, insbesondere der Strahlengang zwischen der zweiten Eintrittsöffnung und dem zweiten Bildsensor, eine Teleoptik umfassen. Grundsätzlich können die Strahlengänge, also der Strahlengang zwischen der ersten Eintrittsöffnung und dem ersten Bildsensor und/oder der Strahlengang zwischen der zweiten Eintrittsöffnung und dem zweiten Bildsensor, gefaltet ausgestaltet sein. Dies reduziert den erforderlichen Bauraum.

In einer weiteren Variante können der erste Abbildungspfad und/oder der zweite Abbildungspfad je eine Optik umfassen, die jede für sich so gestaltet ist, dass für Objekte in einer Entfernung, welche kleiner ist als das 100-fache der kleineren der beiden Brennweiten des anamorphen Systems, der Parallaxenfehler, der durch die Positionierung der Eintrittsöffnungen oder mit anderen Worten durch den unterschiedlichen Einbauort der Abbildungspfade entsteht, reduziert, insbesondere ausgeglichen, wird.

Konkret kann der Parallaxenfehler wie folgt ausgeglichen werden. Die zwei Abbildungspfade zur Erzeugung eines Bildes desselben Objekts können separat in voneinander unabhängigen "Off-Axis"-Systemen geführt und zu individuellen Bildsensoren geleitet werden. Es kann also eine Trennung der über die einzelnen Abbildungspfade erfassten Bilddaten erfolgen, z. B. durch Elemente zur Strahlumlenkung, wie insbesondere Spiegel oder Prismen oder andere geeignete refraktive oder diffraktive optische Elemente. Zwischen dem jeweiligen zur Strahlumlenkung verwendeten optischen Element und dem jeweiligen Bildsensor können weitere optische Elemente, z. B. Spiegel oder Prismen zur Faltung des Strahlengangs angeordnet sein. Die auf diese Weise separierten Bilder oder Bilddaten weisen unterschiedliche Beugungseffekte auf und können individuell bearbeitet werden. Insbesondere können die Bilddaten unabhängig voneinander gestreckt oder gestaucht werden, um sie aneinander anzupassen.

Die erfindungsgemäße Kamera kann ein Sichtfeld (FOV) von mindestens 10 Grad, beispielsweise ein quadratisches FOV von 16 Grad mal 16 Grad (16°x16°), aufweisen. Dies stellt eine deutliche Verbesserung im Vergleich zu dem eingangs zitierten Stand der Technik dar, wo bei gleicher Vergrößerung lediglich ein erreichtes FOV von 6,1 Grad mal 3,8 Grad genannt wird. Insbesondere lässt sich erfindungsgemäß mit z.B. zwei rechteckigen Eintrittsöffnungen und zwei rechteckigen Bildsensoren ein quadratisches FOV realisieren.

Die mindestens zwei Eintrittsöffnungen und/oder die mindestens zwei Bildsensoren können eine rechteckige Querschnittsfläche aufweisen. Dies ist fertigungstechnisch von Vorteil und ermöglicht unter vorgegebenen geometrischen Randbedingungen eine maximalen Öffnungsfläche. Eine rechteckige Querschnittsfläche mit abgerundeten Ecken oder eine andere schlitzartige Ausformung ist ebenfalls möglich. Die mindestens zwei Eintrittsöffnungen können geometrisch voneinander abweichend geformte Querschnittsflächen aufweisen. Diese müssen nicht rechteckig sein.

Das erfindungsgemäße mobile Gerät umfasst eine bereits beschriebene erfindungsgemäße Kamera. Das erfindungsgemäße mobile Gerät hat die bereits beschriebenen Merkmale und Vorteile der erfindungsgemäßen Kamera. Bei dem erfindungsgemäßen mobilen Gerät kann es sich um ein Mobiltelefon, Tablet, Notebook, Smartwatch, Netbook, etc. handeln.

Das erfindungsgemäße Verfahren zum Erzeugen einer Abbildung, insbesondere einer Teleabbildung bzw. vergrößerten Abbildung, mittels einer oben beschriebenen erfindungsgemäßen Kamera umfasst folgende Schritte: Erfassen von Bilddaten mittels der mindestens zwei Bildsensoren; Transformieren der erfassten Bilddaten mittels Fouriertransformation, Generieren eines gemeinsamen Datensatzes aus den transformierten Bilddaten, also den mittels Fouriertransformation transformierten Bilddaten; und Rücktransformieren des generierten gemeinsamen Datensatzes mittels Fouriertransformation. Vorzugsweise kann aus den rücktransformierten Bilddaten eine Abbildung, insbesondere eine Teleabbildung, erzeugt werden. Das erfindungsgemäße Verfahren hat die bereits im Zusammenhang mit der erfindungsgemäßen Kamera beschriebenen Vorteile.

Das Generieren eines gemeinsamen Datensatz aus den transformierten Bilddaten kann ein Zusammenfügen und/oder Maskieren und/oder Ausschneiden und/oder Auswählen und/oder Überlagern von bestimmten Daten oder Datenbereichen umfassen. Dies eliminiert Abbildungsfehler und verbessert die Abbildungsqualität.

Artefakte und/oder Aberrationen in der erzeugten Abbildung können korrigiert werden und/oder nicht im Frequenzraum erfasste Bildinformationen können ergänzt werden. Die Korrektur und/oder Ergänzung kann mittels neuronaler Netzwerke erfolgen. Hierbei können gängige, allgemein verfügbare neuronale Netzwerke verwendet werden. Artefakte und/oder Aberrationen können in der erzeugten Abbildung insbesondere in den Bereichen auftreten, in denen Bilddaten aneinander angefügt, einander überlagert oder ergänzt wurden. In einander überlappenden Bildbereichen können die Frequenzen gewichtet und/oder normiert werden. Weiterhin können Frequenzkanten oder Frequenzsprünge ausgeglichen oder vermieden werden. Dies kann durch Glättung oder Weichzeichnung erfolgen, z.B. indem eine Stufenfunktion an den betroffenen Stellen durch eine abgerundete Stufenfunktion ersetzt wird.

Weiterhin können im Frequenzraum nicht erfasste Bildinformationen zu Artefakten in dem rekonstruierten Bild führen. Bei diesen Artefakten handelt es sich entweder um fehlende Merkmale, also Strukturen, deren Frequenzen hauptsächlich in die fehlenden Bereiche fallen, oder sogenannte Ringing-Artefakte (ringing artefacts), welche wie sich wiederholende Kanten aussehen. Derartige Artefakte können mittels trainierter neuronaler Netzwerke reduziert werden. Als Eingabe in ein solches neuronales Netzwerk wird das mit den mindestens zwei rechteckigen, vorzugsweise schlitzartigen, Bildsensoren erfasste Bild bzw. die Bilddaten verwendet. Als Ausgabe wird das vollständige Bild bzw. die vollständige Abbildung ohne die fehlenden Frequenzkomponenten oder Frequenzbereiche zur Verfügung gestellt. Das neuronale Netzwerk lernt, die meisten Ringartefakte zu entdecken. In diesem Zusammenhang können Diffusionsmodelle (diffusion models) oder GAN-Modelle (GAN - Generative Adversarial Network) verwendet werden. Solche Netzwerke können auch fehlende Bildbereiche ersetzen oder ergänzen, allerdings entspricht der Bildinhalt nicht notwendigerweise dem abzubildenden, also originalen Objekt. Zusätzlich oder alternativ zu der Verwendung von neuronalen Netzwerken als Ansatz zur Reduzierung oder Korrektur von Artefakten kann die Reduktion von Artefakten auch als klassisches Entfaltungsproblem formuliert und mittels iterativer Optimierungsverfahren gelöst werden.

Die Erfindung wird im Folgenden anhand von Ausführungsbeispielen unter Bezugnahme auf die beigefügten Figuren näher erläutert. Obwohl die Erfindung im Detail durch die bevorzugten Ausführungsbeispiele näher illustriert und beschrieben wird, so ist die Erfindung nicht durch die offenbarten Beispiele eingeschränkt und andere Variationen können vom Fachmann hieraus abgeleitet werden, ohne den Schutzumfang der Erfindung zu verlassen.

Die Figuren sind nicht notwendigerweise detailgetreu und maßstabsgetreu und können vergrößert oder verkleinert dargestellt sein, um einen besseren Überblick zu bieten. Daher sind hier offenbarte funktionale Einzelheiten nicht einschränkend zu verstehen, sondern lediglich als anschauliche Grundlage, die dem Fachmann auf diesem Gebiet der Technik Anleitung bietet, um die vorliegende Erfindung auf vielfältige Weise einzusetzen.

Der hier verwendete Ausdruck "und/oder", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elemente verwendet werden. Wird beispielsweise eine Zusammensetzung beschrieben, die die Komponenten A, B und/oder C, enthält, kann die Zusammensetzung A alleine; B alleine; C alleine; A und B in Kombination; A und C in Kombination; B und C in Kombination; oder A, B, und C in Kombination enthalten.
- Fig. 1: zeigt schematisch eine erfindungsgemäße Kamera eines erfindungsgemäßen mobilen Geräts in einer Draufsicht.
- Fig. 2: zeigt schematisch eine erfindungsgemäße Kamera eines mobilen Geräts in Form eines Blockdiagramms.
- Fig. 3: zeigt schematisch den simulierten Strahlengang eines der optischen Pfade in einer perspektivischen Ansicht.

- Fig. 4: zeigt schematisch den in der Figur 3 gezeigten Strahlengang in einer Seitenansicht.
- Fig. 5: zeigt schematisch den Schritt des Erfassens von Bilddaten.
- Fig. 6: zeigt schematisch die mittels Fouriertransformation transformierten, erfassten Bilddaten.
- Fig. 7: zeigt schematisch den Schritt des Maskierens von bestimmten Bilddatenbereichen.
- Fig. 8: zeigt schematisch die Schritte des Generierens eines gemeinsamen Datensatzes und des Rücktransformierens.
- Fig. 9: zeigt schematisch die Auswirkung von Beugungseffekten auf die erfassten Bilddaten und deren Reduktion.
- Fig. 10: zeigt schematisch die Auswirkung des Aspektverhältnisses auf die Ausbildung von Artefakten.

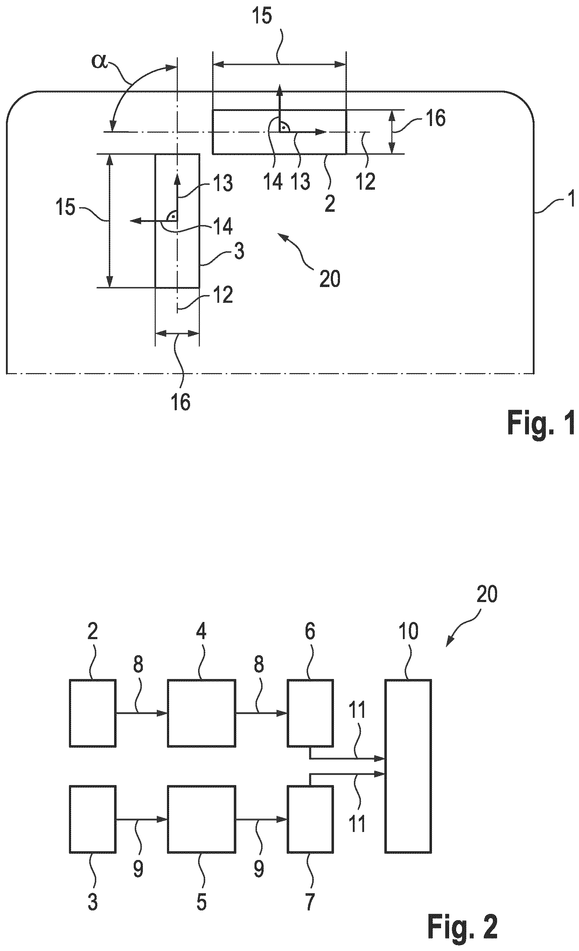

Die Figur 1 zeigt schematisch eine erfindungsgemäße Kamera 20 eines erfindungsgemäßen mobilen Geräts 1 in einer Draufsicht. Bei dem mobilen Gerät 1 kann es sich beispielsweise um ein Mobiltelefon handeln. Die gezeigte Kamera 20 umfasst eine erste Eintrittsöffnung 2 und eine zweite Eintrittsöffnung 3. Die Eintrittsöffnungen 2 und 3 sind in der gezeigten Variante identisch ausgestaltet und weisen jeweils eine Längsrichtung 13 und eine senkrecht dazu verlaufende Querrichtung 14 auf. Die Länge 15 in Längsrichtung 13 der Eintrittsöffnungen 2 und 3 ist jeweils mindestens um den Faktor 1,2, vorzugsweise mindestens den Faktor 2, größer als die Breite 16 in Querrichtung 14.

Die Längsrichtungen 13 oder in Längsrichtung 13 verlaufende Mittellinien 12 der Eintrittsöffnungen 2 und 3 schließen einen Winkel α ein, welcher vorzugsweise zwischen 70 Grad und 110 Grad liegt und in der gezeigten bevorzugten Variante 90 Grad beträgt.

In der in der Figur 1 gezeigten Variante sind die Eintrittsöffnungen 2 und 3 nebeneinander und versetzt zueinander angeordnet. Alternativ dazu sind auch eine T-förmige Anordnung oder eine nicht versetzte L-förmige Anordnung möglich.

Die Figur 2 zeigt schematisch eine erfindungsgemäße Kamera 20 eines mobilen Geräts 1 in Form eines Blockdiagramms. Die gezeigte Kamera 20 umfasst mindestens zwei Bildsensoren 6 und 7, wobei die erste Eintrittsöffnung 2 einem ersten Bildsensor 6 über einen ersten Abbildungspfad 8 zugeordnet ist und eine zweite Eintrittsöffnung 3 einem zweiten Bildsensor 7 über einen zweiten Abbildungspfad 9 zugeordnet ist. Der erste Abbildungspfad 8 und der zweite Abbildungspfad 9 umfassen jeweils eine anamorphe Optik 4 bzw. 5 und eine nicht explizit gezeigte Teleoptik.

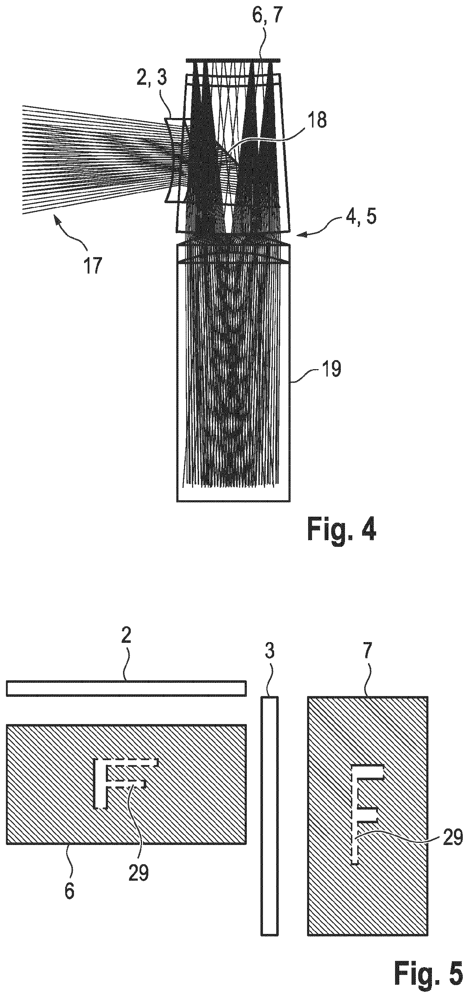

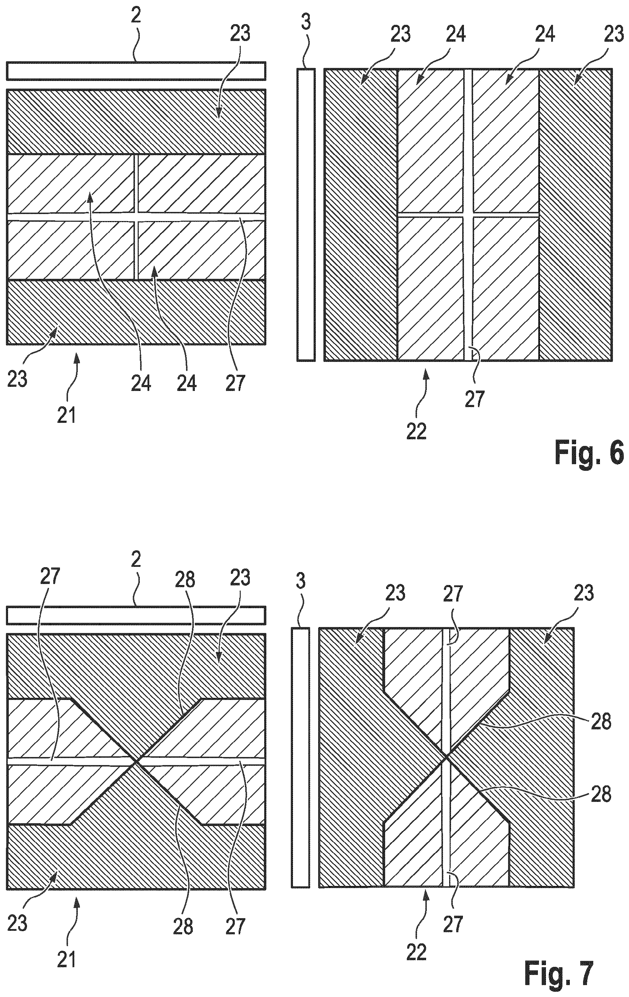

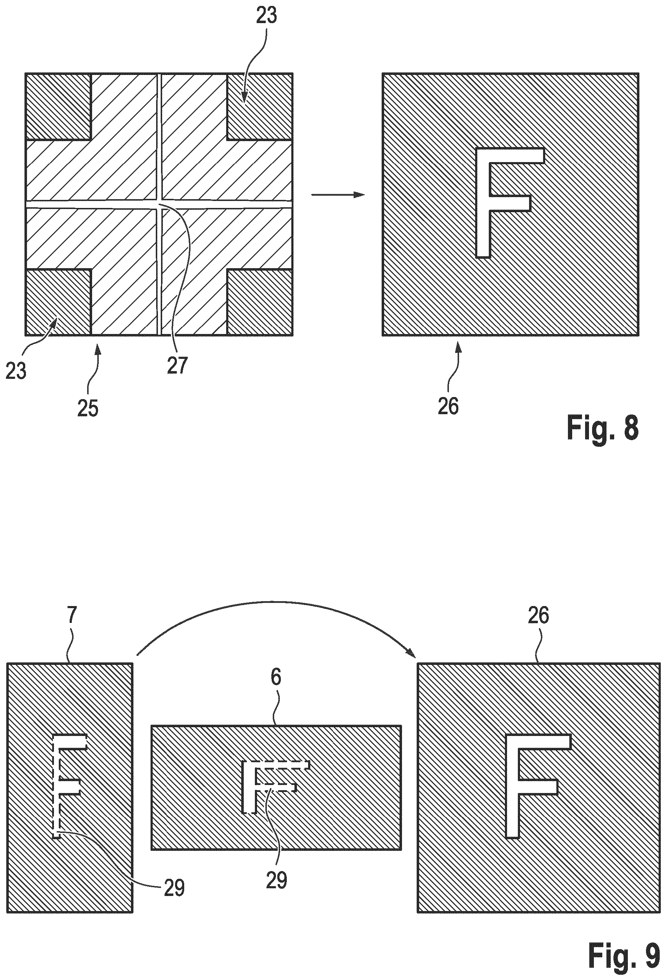

Optional umfasst die Kamera 20 eine Bildverarbeitungseinrichtung 10, welche zum Empfangen von mit Hilfe der Bildsensoren 6 und 7 erfassten Bilddaten und zur Verarbeitung dieser ausgelegt ist. Die Datenübertragung ist durch Pfeile mit der Bezugsziffer 11 gekennzeichnet. Die Bildverarbeitungseinrichtung 10 ist dazu ausgelegt, die empfangenen Bilddaten der Bildsensoren 2, 3 mittels Fouriertransformation zu transformieren (siehe Figuren 5 und 6), aus den transformierten Bilddaten einen gemeinsamen Datensatz zu generieren (siehe Figur 7), also die transformierten Bilddaten zu einem gemeinsamen Datensatz zusammenzufügen, und den generierten gemeinsamen Datensatz mittels Fouriertransformation zurückzutransformieren (siehe Figur 8). Zur Korrektur von Artefakten und/oder Aberrationen können neuronale Netzwerke, wie oben bereits beschrieben, verwendet werden.

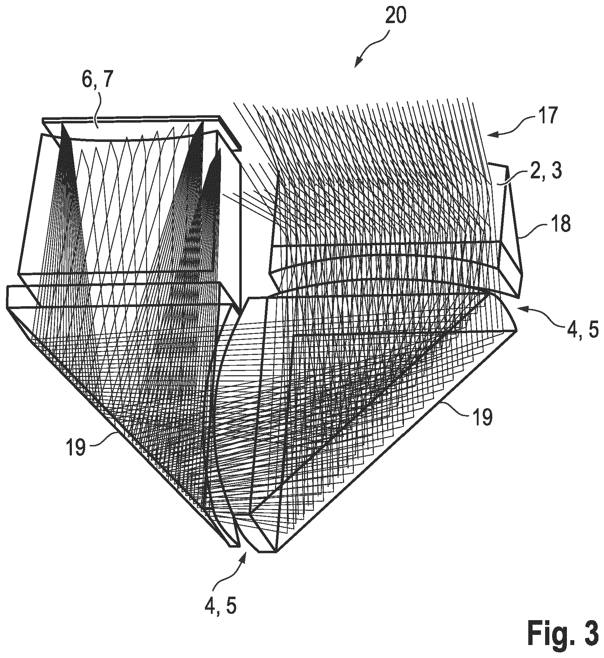

Die Figur 3 zeigt schematisch den mit der Software Zemax simulierten Strahlengang 17 eines der optischen Pfade 8, 9 der Kamera 20 in einer perspektivischen Ansicht. Die Figur 4 zeigt schematisch den in der Figur 3 gezeigten Strahlengang 17 in einer Seitenansicht. Durch die rechteckige Eintrittsöffnung 2, 3 in die Kamera 20 eintretendes Licht 17 wird mittels eines Spiegels 18 in eine Ebene des mobilen Geräts 20 reflektiert und wird anschließend in dieser Ebene zu dem rechteckigen Bildsensor 6, 7 geführt. Der Bildsensor 6, 7 ist in der gezeigten Variante senkrecht zu der Ebene des mobilen Geräts 20, also stehend, angeordnet. Alternativ dazu ist auch eine Anordnung des Bildsensors 6, 7 in der Ebene des mobilen Geräts 20, also liegend, möglich.

Im Strahlengang 17 ist zwischen der Eintrittsöffnung 2, 3 oder dem Spiegel 18 und dem Bildsensor 6, 7 eine anamorphe Optik 4, 5 angeordnet. Mittels der anamorphen Optik 4, 5 wird das Bild oder die Abbildung verzerrt und auf diese Weise das Sichtfeld oder das FOV vergrößert. In der in den Figuren 3 und 4 gezeigten Variante sind zudem im Strahlengang weitere optische Elemente, beispielsweise Prismen und/oder Spiegel 19 angeordnet, welche eine Faltung des Strahlengangs 17 bewirken.

Grundsätzlich benötigen die zum Erzeugen einer Tele-Abbildung erforderlichen Telelinsen oder eine entsprechende Teleoptik eine große Eintrittsöffnung. Aufgrund des begrenzten Bauraums in mobilen Geräten, wie beispielsweise Mobiltelefonen, lassen sich große Eintrittsöffnungen selbst bei einem gefalteten Strahlengang nicht realisieren, insbesondere da der für die Faltung des Strahlengangs erforderliche Spiegel 18 in seiner Höhe durch die Dicke oder Tiefe des mobilen Geräts begrenzt wird. Dies gilt insbesondere im Falle von quadratisch ausgestalteten Eintrittsöffnungen und quadratisch ausgestalteten Bildsensoren. Durch eine rechteckige Ausgestaltung der Eintrittsöffnung lässt sich zumindest die effektive Größe der Eintrittsöffnung erhöhen. Allerdings treten bei größeren Aspektverhältnissen, insbesondere größer als 3:2, beugungsbedingte Artefakte auf.

In der gezeigten Variante wird ein Aspektverhältnis der beiden Eintrittsöffnungen 3 und 4 und der beiden Bildsensoren 6 und 7 von 3:1 verwendet. Die zusätzlich verwendete anamorphe Optik 4, 5 kann beispielsweise eine Streckung der Abbildung von 2:1 bewirken, wodurch die Höhe des jeweiligen Bildsensors 6, 7 im Vergleich zu einer quadratischen Ausgestaltung halbiert werden kann (beispielsweise von 10x10mm auf 10x5mm), indem die Abbildung oder das Bild in Richtung der Beugung komprimiert wird. Beide Maßnahmen, also einerseits die Erhöhung des Aspektverhältnisses und andererseits die Verwendung eines anamorphen Designs, ermöglichen die Integration eines Telesystems mit einer geringen Blendenzahl und einem großen FOV in ein mobiles Gerät, beispielsweise ein Mobiltelefon.

Im Folgenden wird anhand der Figuren 5 bis 10 ein erfindungsgemäßes Verfahren zum Erzeugen einer vergrößerten Abbildung, also einer Tele-Abbildung, mittels einer erfindungsgemäßen Kamera, beispielsweise einer anhand der Figuren 1 bis 4 beschriebenen Kamera, näher erläutert. Dabei wird zur besseren Veranschaulichung eine Simulation basierend auf einem paraxialen System mit zwei Eintrittsöffnungen 2, 3 mit jeweils einem Aspektverhältnis von 15:1 verwendet.

In einem ersten Schritt, welcher in der Figur 5 schematisch gezeigt ist, werden Bilddaten, vorliegend des Großbuchstaben "F", mittels der zwei Bildsensoren 6, 7 erfasst. Dabei tritt in Abhängigkeit von der Orientierung der Eintrittsöffnungen 2 und 3 beugungsbedingt eine (in den Figuren schlecht darstellbare) Unschärfe 29 auf. Zudem sind die Abbildungen anamorph in Richtung der Beugung komprimiert.

Anschließend werden in einem zweiten Schritt die erfassten Bilddaten mittels Fouriertransformation transformiert. Dies ist in der Figur 6 schematisch gezeigt. Die schematisch dargestellten, transformierten Bilddaten (Fourierspektrum) sind mit den Bezugsziffern 21 und 22 gekennzeichnet. In den Bereichen 27 weist das Fourierspektrum hohe Intensitäten auf. Durch die Bezugszeichen 23 sind in Bezug auf ein quadratisches Fourierspektrum eines gedachten quadratischen Bildsensors Bereiche gekennzeichnet, für welche keine Bildinformation erfasst worden sind. Die Pfeile 24 kennzeichnen Bereiche, in welchen abhängig von der Orientierung der Eintrittsöffnungen 2 und 3 Beiträge höherer Ortsfrequenzen verloren gehen.

In einem weiteren, in der Figur 7 schematisch gezeigten Schritt werden die transformierten Bilddaten 21 und 22 maskiert und/oder Teilbereiche dieser ausgeschnitten. Anschließend werden die in der Figur 7 gezeigten transformierten und maskierten Bilddaten 21 und 22 zu einem gemeinsamen Datensatz 25 zusammengefügt, wobei die Bereiche 23 mit beugungsbedingtem Informationsverlust ignoriert oder unterdrückt werden. Dieser Schritt ist schematisch in der Figur 8 links gezeigt. In der Praxis kann auch auf das Maskieren verzichtet werden und es werden direkt die relevanten Bereiche zusammengefügt. Weiterhin können einzelne Bilddatenbereiche an den Kanten 28 aus den verschiedenen Bilddatensätzen 21 und 22 einander überlappt oder überlagert werden. Hierdurch können sichtbare Übergänge vermieden werden und die Bildqualität insgesamt verbessert werden.

Der erzeugte gemeinsame Datensatz 25 wird in einem weiteren, in der Figur 8 gezeigten Schritt mittels Fouriertransformation zurück transformiert. Das Ergebnis ist die in der Figur 8 rechts gezeigte Tele-Abbildung des mittels der erfindungsgemäßen Kamera 20 aufgenommenen Großbuchstabens "F". Vorteilhafterweise können Artefakte und/oder Aberrationen in der erzeugten Abbildung 26 korrigiert werden und/oder fehlende Bereiche 23 in den Ecken (siehe Figur 8 links) in der erzeugten Abbildung 26 ergänzt werden, beispielsweise mittels neuronaler Netzwerke. Zudem können die Bereiche, an denen die transformierten Bilddaten 21 und 22 zusammengefügt wurden, geglättet und/oder in Bezug auf Bildfehler korrigiert werden, z.B. mittels abgerundeter Stufenfunktionen.

Die Figur 9 illustriert zusammenfassend die Auswirkung von Beugungseffekten an den Eintrittsöffnungen auf die mittels der Bildsensoren 6 und 7 erfassten Bilddaten sowie deren deutliche Reduktion in der erfindungsgemäß erzeugten Abbildung 26.

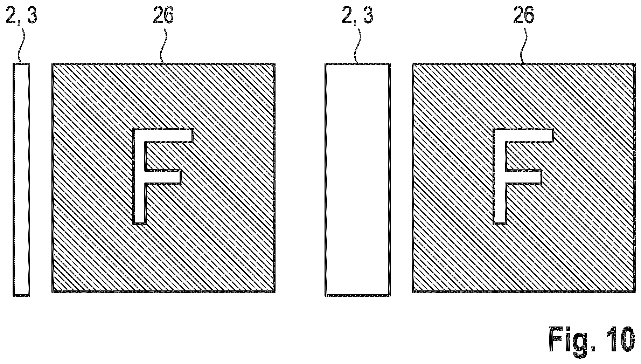

Die Figur 10 zeigt die Auswirkung des Aspektverhältnisses von 15:1 einer Eintrittsöffnung 2, 3 im Vergleich zu einer Eintrittsöffnung 2, 3 mit einem Aspektverhältnis von 3:1. Bei einem Aspektverhältnis von 3:1 sind die verbleibenden Artefakte deutlich reduziert.

### Bezugszeichenliste:

- 1: mobiles Gerät
- 2: Eintrittsöffnung
- 3: Eintrittsöffnung
- 4: anamorphe Optik
- 5: anamorphe Optik
- 6: Bildsensor
- 7: Bildsensor
- 8: Abbildungspfad
- 9: Abbildungspfad
- 10: Bildverarbeitungseinrichtung
- 11: Datenübertragung
- 12: Mittellinie
- 13: Längsrichtung
- 14: Querrichtung
- 15: Länge
- 16: Breite
- 17: Strahlengang
- 18: Spiegel
- 19: Prisma / Spiegel
- 20: Kamera
- 21: transformierte Bilddaten
- 22: transformierte Bilddaten
- 23: Bereiche mit beugungsbedingtem Informationsverlust
- 24: Bereiche mit fehlenden höheren Ortsfrequenzen
- 25: gemeinsamer Datensatz
- 26: erfindungsgemäß erzeugte Abbildung
- 27: Bereich mit hohen Intensitäten
- 28: Bilddatenbereiche für Überlapp
- 29: Unschärfe
- α: Winkel

## Patentansprüche

1. Kamera (20) eines mobilen Geräts (1), welche mindestens zwei Eintrittsöffnungen (2, 3) und mindestens zwei Bildsensoren (6, 7) umfasst, wobei eine erste Eintrittsöffnung (2) einem ersten Bildsensor (6) über einen ersten Abbildungspfad (8) zugeordnet ist und eine zweite Eintrittsöffnung (3) einem zweiten Bildsensor (7) über einen zweiten Abbildungspfad (9) zugeordnet ist,
**dadurch gekennzeichnet, dass**
die Eintrittsöffnungen (2, 3) jeweils eine Lichteintrittsfläche mit einer Längsrichtung (13) und einer senkrecht dazu verlaufenden Querrichtung (14) aufweisen, wobei jeweils die Länge (15) der Eintrittsöffnung (2, 3) in Längsrichtung (13) mindestens um den Faktor 1,2 größer ist als die Breite (16) der Eintrittsöffnung (2, 3) in Querrichtung (14),
wobei der erste Abbildungspfad (8) und der zweite Abbildungspfad (9) jeweils eine anamorphe Optik (4, 5) umfassen.

2. Kamera (20) nach Anspruch 1,
**dadurch gekennzeichnet, dass**
die erste Eintrittsöffnung (2) und die zweite Eintrittsöffnung (3) geometrisch so zueinander angeordnet sind, dass die Längsrichtung (13) der ersten Eintrittsöffnung (2) und die Längsrichtung (13) der zweiten Eintrittsöffnung (3) einen Winkel (α) zwischen 70 Grad und 110 Grad einschließen.

3. Kamera (20) nach Anspruch 1 oder Anspruch 2,
**dadurch gekennzeichnet, dass**
die Kamera (20) eine Bildverarbeitungseinrichtung (10) umfasst, welche dazu ausgebildet ist, von den mindestens zwei Bildsensoren (6, 7) erfasste Bilddaten zu empfangen (11), die empfangenen Bilddaten der einzelnen Bildsensoren (6, 7) mittels Fouriertransformation zu transformieren, aus den transformierten Bilddaten (21, 22) einen gemeinsamen Datensatz (25) zu generieren und den generierten gemeinsamen Datensatz (25) mittels Fouriertransformation zurück zu transformieren.

4. Kamera (20) nach Anspruch 3,
**dadurch gekennzeichnet, dass**
die Bildverarbeitungseinrichtung (10) dazu ausgebildet ist, zum Generieren des gemeinsamen Datensatzes (25) die transformierten Bilddaten (21, 22) der einzelnen Bildsensoren (6, 7) teilweise zu maskieren, sodass sich die transformierten Bilddaten (21, 22) gegenseitig ergänzen und/oder teilweise überlappen, und/oder zum Generieren des gemeinsamen Datensatzes (25) transformierte Bilddatenteilbereiche so auszuwählen, dass sich die transformierten Bilddaten (21, 22) gegenseitig ergänzen und/oder teilweise überlappen.

5. Kamera (20) nach einem der Ansprüche 1 bis 4,
**dadurch gekennzeichnet, dass**
die Bildverarbeitungseinrichtung (10) zur Korrektur von Artefakten und/oder Aberrationen in einer mittels der zurücktransformierten Bilddaten erzeugten Abbildung und/oder zur Ergänzung von Bilddaten in von den Bildsensoren (6, 7) nicht erfassten Fourier-Spektralbereichen (23) ausgelegt ist.

6. Kamera (20) nach Anspruch 5,
**dadurch gekennzeichnet, dass**
die Bildverarbeitungseinrichtung (10) zur Korrektur von Artefakten und/oder Aberrationen und/oder zur Ergänzung von Bilddaten in einer mittels der zurücktransformierten Bilddaten erzeugten Abbildung (26) mittels eines neuronalen Netzwerks ausgelegt ist.

7. Kamera (20) nach einem der Ansprüche 1 bis 6,
**dadurch gekennzeichnet, dass**
die Bildverarbeitungseinrichtung (10) zum Pixel Binning ausgelegt ist.

8. Kamera (20) nach einem der Ansprüche 1 bis 7,
**dadurch gekennzeichnet, dass**
der erste Abbildungspfad (8) und/oder der zweite Abbildungspfad (9) eine Teleoptik umfassen.

9. Kamera (20) nach einem der Ansprüche 1 bis 8,
**dadurch gekennzeichnet, dass**
der erste Abbildungspfad (8) und/oder der zweite Abbildungspfad (9) je eine Optik umfassen, die jede für sich so gestaltet ist, dass für Objekte in einer Entfernung, welche kleiner ist als das 100-fache der kleineren der beiden Brennweiten des anamorphen Systems, der Parallaxenfehler, der durch die Positionierung der Eintrittsöffnungen entsteht, reduziert wird.

10. Kamera (20) nach einem der Ansprüche 1 bis 9,
**dadurch gekennzeichnet, dass**
die Kamera (20) ein Sichtfeld von mindestens 10 Grad aufweist.

11. Kamera (20) nach einem der Ansprüche 1 bis 10,
**dadurch gekennzeichnet, dass**
die mindestens zwei Eintrittsöffnungen (2, 3) und/oder die mindestens zwei Bildsensoren (6, 7) eine rechteckige Querschnittsfläche aufweisen, und/oder die mindestens zwei Eintrittsöffnungen (2, 3) geometrisch voneinander abweichend geformte Querschnittsflächen aufweisen.

12. Mobiles Gerät (1), welches eine Kamera (20) nach einem der Ansprüche 1 bis 11 umfasst.

13. Verfahren zum Erzeugen einer Abbildung mittels einer Kamera (20) nach einem der Ansprüche 1 bis 11,
**dadurch gekennzeichnet, dass**
das Verfahren folgende Schritte umfasst:
- Erfassen von Bilddaten mittels der mindestens zwei Bildsensoren (6, 7),
- Transformieren der erfassten Bilddaten mittels Fouriertransformation (21, 22),
- Generieren eines gemeinsamen Datensatzes (25) aus den transformierten Bilddaten (21, 22),
- Rücktransformieren des generierten gemeinsamen Datensatzes (25) mittels Fouriertransformation.

14. Verfahren nach Anspruch 13,
**dadurch gekennzeichnet, dass**
das Generieren eines gemeinsamen Datensatzes (25) aus den transformierten Bilddaten (21, 22) ein Zusammenfügen und/oder Maskieren und/oder Ausschneiden und/oder Auswählen und/oder Überlagern von bestimmten Bilddatenbereichen umfasst.

15. Verfahren nach Anspruch 13 oder 14,
**dadurch gekennzeichnet, dass**
Artefakte und/oder Aberrationen in der erzeugten Abbildung (26) korrigiert werden und/oder nicht im Frequenzraum erfasste Bildinformationen in der erzeugten Abbildung (26) ergänzt werden.
